(19) Europäisches Patentamt

European Patent Office

Office européen des brevets

(11) **EP 3 753 794 B1**

(12) **EUROPEAN PATENT SPECIFICATION**

(45) Date of publication and mention
of the grant of the patent:
**07.08.2024   Bulletin 2024/32**

(21) Application number: **19181168.6**

(22) Date of filing: **19.06.2019**

(51) International Patent Classification (IPC):
***B60T 8/172*** *(2006.01)*        ***B60T 8/88*** *(2006.01)*
***B60T 17/22*** *(2006.01)*        ***G07C 5/00*** *(2006.01)*

(52) Cooperative Patent Classification (CPC):
**B60T 17/221; B60T 8/172; B60T 8/885;**
**G07C 5/0808;** B60T 2260/06; B60T 2270/406;
G07C 5/008

(54) **METHOD AND APPARATUS FOR MONITORING A BRAKE PERFORMANCE OF A VEHICLE**

VERFAHREN UND VORRICHTUNG ZUR ÜBERWACHUNG DER BREMSLEISTUNG EINES
FAHRZEUGS

PROCÉDÉ ET APPAREIL DE SURVEILLANCE D'UNE PERFORMANCE DE FREINAGE D'UN
VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.12.2020   Bulletin 2020/52**

(73) Proprietor: **KNORR-BREMSE Systeme für
Nutzfahrzeuge GmbH
80809 München (DE)**

(72) Inventors:
 • **Compera, Yves
   85748 Garching bei München (DE)**
 • **Merza, Valér
   2000 Szentendre (HU)**
 • **Fry, Matthew
   North Somersec, BS48 1PP (GB)**
 • **Held, Sebastian
   71063 Sindelfingen (DE)**
 • **Charles, Bennett
   San Marino, 1190 (US)**

(56) References cited:
**EP-A2- 2 468 596        EP-A2- 3 392 107
WO-A1-99/06809          DE-A1- 19 745 581
DE-B4- 19 745 581        US-A- 5 707 117
US-A- 5 892 437          US-A1- 2011 066 347**

**Description**

The present invention relates to a method and an apparatus for monitoring a brake performance of a vehicle and, in particular, to a system and a vehicle dynamical control to predict maintenance for commercial vehicles including a trailer.

Methods for monitoring a brake performance of a vehicle are known from GB 2 462 864 B, GB 2 531 391 B and GB 2 532 112 B. In GB 2 462 864 B The braking control pressure and vehicle deceleration are measured at various moments during a braking event. The braking control pressures and vehicle decelerations are each classified into a set of ranges, and the number of values falling into a given range are counted. A value representing the quality of matching the tractor and trailer braking is calculated by dividing the average of the braking pressures with the average of the decelerations. In GB 2 531 391 B and GB 2 532 112 B the braking control pressures and vehicle decelerations are measured at various points during a braking event. The deviation between the determined deceleration and the reference deceleration associated with the determined braking demand is determined and future brake events are estimated based on a trend analysis. Another conventional monitoring is disclosed in US 5,892,437, wherein a regression model is used before issuing a warning.

However, these conventional methods appear to be error-prone and there is a need to improve the monitoring of the brake performance to foresee potential braking failure in good time before an immediate action is needed. In this way, the next maintenance can be scheduled earlier.

Therefore, there is a demand for a method and an apparatus for a vehicle dynamic control that are able to improve the monitoring of the brake performance and thus provide a reliable prediction for an upcoming maintenance.

At least some of these problems are overcome by the present invention, defined as a method according to claim 1, a computer program according to claim 10 and an apparatus according to claim 11. The dependent claims refer to further advantageous realizations of the subject matter of the independent claims.

The present invention relates to a method according to claim 1 for monitoring a brake performance of a vehicle, in particular of a trailer of a commercial vehicle. The method includes: collecting of sensor data from various sensors, the sensor data are associated with brake events; determining at least one brake performance value using the sensor data optionally based on at least one of the following analyses: (A) a suspension deflection analysis based on a comparison of deflections of wheel suspensions while braking; (B) a brake force loss analysis based on a comparison of wheel speed (or slip) values of different wheels; and is based on (C) a statistical analysis based on a regression. The method further includes detecting a malfunctioning of at least one brake of at least one wheel based on the determined at least one brake performance value.

Optionally, this method may further include an outputting of the results for display or alerting the driver (e.g. with respect of at least one brake performance value). The term regression may relate to a multiple or a simple/single regression. Embodiments may use the multiple regression instead of the simple regression, because the consideration of multiple parameters improves the statistical reliability. For example, a given parameter may for some reason be corrupt or the respective sensor may have encountered an error. It is understood that a multiple regression is more general than a single regression, because it may take into consideration multiple input parameters (that influence the outcome, i.e. the vehicle deceleration). Whereas the single regression analysis yields a one-dimensional curve representing the (linear) dependency on only one input parameter, the multiple regression analysis results in a hyperplane. Nevertheless, the single regression can be seen as a special limit of the multiple regression in that only one input parameter is used.

A particular advantage of taking into consideration of plural analyses (A), (B), (C) relates to the achievable fault resistance. If for some reason one analysis provides a fault alert, this could be recognized. For example, if one of the brake performance values indicates a malfunctioning of at least one wheel brake, this result can first be verified by a second analysis before an conclusion is drawn (e.g. to issue an alert). Nevertheless, such fault alerts may be recorded in a log file for later inspection and review to find the cause of it.

Moreover, the defined three analyses (A), (B) and (C) are statistically independent, because they use different sensors or different (input) parameters so that there is no correlation between the obtained results. This is a particular advantage of embodiments over prior art results, because this increases significantly the reliability of the results.

The statistical analysis includes:

- optionally, determining as sensor data for various brake events: a vehicle deceleration and/or a brake demand signal and/or at least two parameters selected from a demand pressure, a vehicle load, a vehicle speed, a slip, a lateral deceleration etc.;
- collecting reference sensor data associated with brake events assumed to be accurate and using the reference sensor data for forming a regression hyperplane (or curve);
- collecting sensor data during operation of the vehicle;
- conducting a hypothesis test by comparing the reference sensor data with the sensor data during operation by determining a likelihood value that a difference between the sensor data during operation and the reference sensor data is of no statistical significance;
- optionally, determining one or more residuals, especially their sign, of the sensor data during operation relative to the regression hyperplane (or curve);
- determining a first brake performance value based the likelihood value.

The reference sensor data may relate to reference brake events that may be taken during an inspection (e.g. a brake test on a designated brake tester) or immediately thereafter so that the resulting brake results can be assumed to be accurate. The sensor data collected during operation may be defined as sensor data taken for brake events under road conditions (during normal driving, i.e. not on a designated brake tester). These sensor data can be collected during predetermined time periods after a previous inspection or monitoring, wherein the predetermined time periods can be selected freely (e.g. within 3 days, 5 days, a week etc). However, they should result in a sample of brake events that is large enough to cover most of the relevant brake scenarios, but the time period should not be too long to have a chance to detect in time any brake failure. Depending on the concrete situation, the ideal length of the time periods may vary, but can be find by an optimization (to find a compromise between both mentioned effects).

Optionally, the brake force loss analysis includes one or more or all of the following steps:

- receiving sensor signals from wheel speed sensors and/or calculating slip values of different wheels;
- determining a variance of the slip values of different or all (braked) wheels while braking;
- determining a second brake performance value based on the variance of the slip values.

One particular possibility would be to perform some or all of the method steps for all wheels that shall contribute to the braking on one side of an exemplary trailer. However, also a subset of the wheels can be taken into consideration for the method. It is also possible to consider the wheels on one or more axles, i. e. on both sides of the vehicle.
The various sensors may include one or more height sensors for controlling one or more air bellows. Then, according to another embodiment, the suspension deflection analysis includes one or more or all of the following steps:

- determining a height of the suspension at one or more wheels based on sensor signals from the one or more height sensors while braking;
- determining a deflection force caused by a brake force while braking;
- determining a third brake performance value based on the determined deflection force.

According to yet another embodiment, the method may include one or more or all of the following steps:

- defining at least one threshold for each or at least one of the first to third brake performance values;
- establishing the malfunctioning if at least two brake performance values exceed at least one of their respective thresholds;
- issuing an alert if the malfunctioning is established.

For example, each brake performance value may be compared with one or more thresholds to define a warning signal if one (weaker or lower) threshold is violated and/or an alarm if a second, stronger (or higher) threshold is violated. Optionally, an alert is issued only if at least two thresholds (e.g. belonging to different brake performance values or to the same) are violated. The alert may be a weaker warning (e.g. an increasing decline of a brake) or a stronger alarm (e.g. a severe brake failure) and may be visualize to the driver (e.g. on a display to trigger an intermediate inspection) or at least stored in an error log file for later inspection.
According to yet another embodiment, the method may include:

- detecting a cornering of the vehicle; and/or
- filtering sensor data based on a detected cornering.

The cornering may be detected using acceleration sensors that are sensible for lateral accelerations or yaw moments to detect the cornering.
According to yet another embodiment, the vehicle is a trailer or a tractor or a vehicle combination and the collected sensor data are associated with wheels on one side or with wheels one or more axles of the vehicle.
This method may also be implemented in software or a computer program product and the order of steps may be different as long as the desired effect is achievable. Embodiments of the present invention can, in particular, be implemented in electronic control unit (ECU) of an electronic brake system or implemented by software or a software module in any ECU. Therefore, embodiment relate also to a computer program having a program code for performing the method, when the computer program is executed on a processor. It is also possible that the evaluation is not performed within a control- or processing at the vehicle, but in a cloud or any kind for remote processing unit that is outside the vehicle. In addition, further embodiments relate to an IoT (internet of things) device, which can be installed on a given vehicle.

Embodiments relate further to an apparatus for monitoring a brake performance of a vehicle, in particular of a trailer of a commercial vehicle. The vehicle comprises various sensors for collecting sensor data associated to brake events. The apparatus includes a control unit configured to perform the following:

- collecting of sensor data from at least some of the various sensors;
- determining at least one brake performance value using the collected sensor data based on at least one of the following analyses:

    (A) a suspension deflection analysis based on a comparison of deflections of wheel suspensions while braking ;
    (B) a brake force loss analysis on a comparison of wheel speed or slip values of different wheels;
    (C) a statistical analysis based on a regression;

- detecting a malfunctioning of at least one brake of at least one wheel of the vehicle based on the determined at least one brake performance value.

According to further embodiments all or some method steps defined before can be implemented as optional functions achieved by the apparatus, i.e. the control unit may further be configured to perform some or all steps of corresponding method.

Embodiments relate further to a vehicle with an electronic brake system (EBS, TEBS) with an integrated apparatus as defined before.

In summary: according to embodiments, a loss of brake performance is determined based on one or more analyses (A), (B), (C), wherein each analysis determine a brake performance value that can be compared with each other. This comparison offers the possibility to make an internal verification so that the likelihood of a failure can be double checked by the system. This results in a significant increase in the reliability, since each approach is faced to appropriate influences effecting their accuracy which are mitigated by relying on the multiple approaches. The increase in the reliability is in particular achieved due to low cross-correlation of the different statistical analyses, which are based on very different data sets. Even if one data set shows an anomaly, it is extremely unlikely that the same anomaly occurs in the other approaches, because of the difference in the collected data.

Some examples of the systems and/or methods will be described in the following by way of examples only, and with respect to the accompanying figures, in which:

Fig. 1          depicts a flow chart of a method for monitoring a brake performance of a vehicle according to an embodiment of the present invention;

Fig. 2          illustrates a possible scenario for using the method according to embodiments;

Fig. 3A,3B      show a regression analysis with a reference curve and road braking events and residuals;

Fig. 4A-4C      illustrate the Cpk-analysis for determining a brake performance value according to another embodiment;

Fig. 5          illustrates measurements to detect a brake force loss on a wheel by comparing slip values according to embodiments;

Fig. 6          illustrates a filtering of braking events dependent on a possible cornering according to embodiments;

Fig. 7          shows the variance of slip values as function of the brake pressure for different scenarios of pressure failure on one wheel;

Fig. 8          illustrates the suspension deflection analysis according to yet another embodiment.

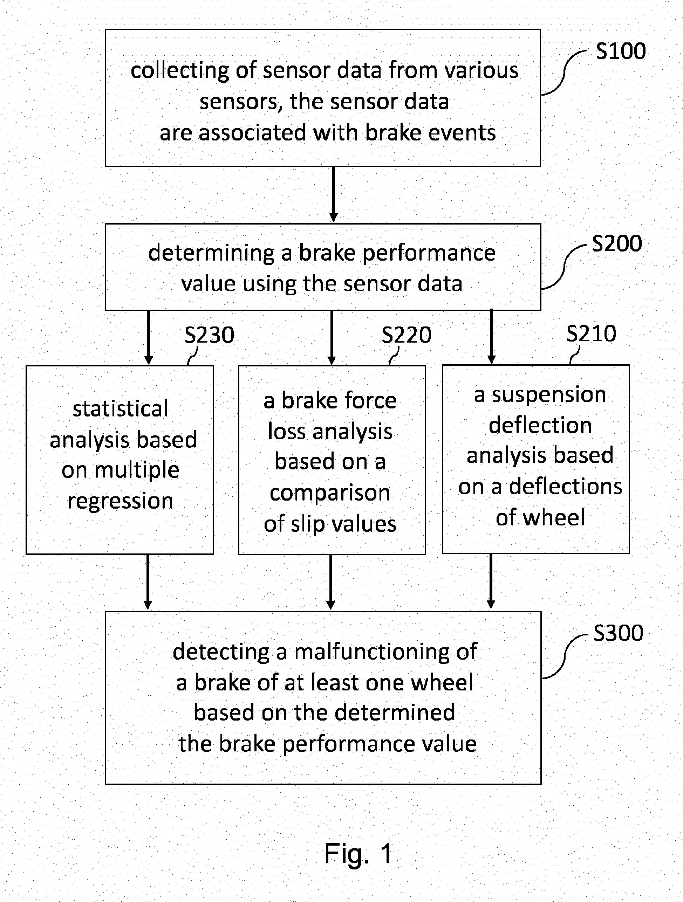

Fig. 1 depicts a flow chart of a method for monitoring a brake performance of a vehicle. The method comprises:

- collecting S100 of sensor data from various sensors, the sensor data are associated with brake events;
- determining S200 at least one brake performance value BPV (BPV1, BPV2, BPV3) using the sensor data based on at least two of the following analyses:

    (A) a suspension deflection analysis S210 based on a global suspension deflection and/or a comparison of deflections of wheel suspensions while braking;
    (B) a brake force loss analysis S220 based on a comparison of wheel speed or slip values of different wheels;
    (C) a statistical analysis S230 based on a regression;

- detecting S300 a malfunctioning of at least one brake of at least one wheel based on the determined at least one brake performance value BPV (BPV1, BPV2, BPV3).

This method may also be implemented by or on a computer. A person of skill in the art would readily recognize that various steps of the methods may be performed by programmed computers or any kind of processing unit. Embodiments are also intended to cover program storage devices, e.g., digital data storage media, which are machine or computer readable and encode machine-executable or computer-executable programs of instructions, wherein the instructions perform some or all of the acts of the described methods, when executed on the computer or processor.

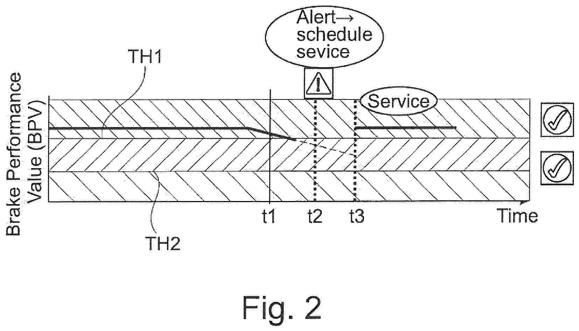

Fig. 2 illustrates a possible scenario for using the method according to embodiments. The brake performance value(s) BPV can be determined for the braking performance of some or each wheel and shall indicate an occurring malfunctioning of at least one of the wheel brakes of the vehicle (e.g. a trailer). Therefore, it will be used to monitor or estimate a future brake performance failure and can thus indicate a needed repair.

In normal situations, the brake performance value BPV is above a particular selected first threshold TH1 (in Fig. 2 up to a first time t1). At the first time t1, the brake performance value BPV drops below the first threshold TH1 indicating that a malfunctioning was detected that resulted in a steady decline of brake performance. Should the brake performance value BPV remain below the first threshold TH1 for a particular period of time, e.g. up to a second time t2, an alert to schedule a service may be generated. After the service at a third time t3, when the brake will again operate correctly, the brake performance value BPV is again above the first threshold TH1 and will be further monitored continuously.

For example, trailers are to be checked in regular time intervals. Depending on the violation of the first threshold TH1 the exemplary trailer can be checked during the normal safety inspection which, for example, is carried out based on the regulatory requirements (for example every 4 weeks or another period) to test and repair possible brake failures. If, however, the brake performance value BPV drops significantly below the first threshold TH1, an intermediate inspection may be needed. To detect such severe brake failures, a second threshold TH2 may be defined indicating that an immediate inspection/service is needed.

The brake performance may be measured and recorded after each safety inspection. These results can be used as reference values. Although one could measure the brake performance already from a single measurement, the outcome is much more reliable if a statistical sample of brake events are collected to take into consideration allowable brake variations. For example, multiple braking events may be used to obtain a statistical sample of braking events which are supposed to have a normal distribution, for example at each, some or all wheels of the exemplary trailer. This reference sample can be used for a regression analysis to define the reference hyperplane, when using multiple regression, or a curve, when using a single, linear regression.

After the collection of reference brake events, the brake performance is determined over predefined time periods (e.g. on a weekly basis) by collecting brake events that define further samples that are to be compared with measured brake performance events for the reference sample taken after the inspection. The samples of brake events during normal operation, e.g. the number of brake events, may be taken so that sufficient measure values are available. On the other hand, the samples should be not too large in order to ensure that a severe malfunctioning of the brake is immediately detected to initiate a needed inspection. The sample size may be within the region of 100 to 1000 brake events which are measured over a period of, e.g., one week or a couple of days. Each of these samples are then compared with the reference sample which is taken immediately after the inspection in order to detect any brake performance loss during operation of the vehicle. This comparison is implemented by the mentioned statistical analysis. Ideally, the reference sample and the sample during normal operation are taken under equivalent situations and with more or less the same size.

According to further embodiments, the brake performance value BPV can be based on different quantities. For example, the brake performance value BPV may be related to a probability that the sample taken during normal operation of the vehicle has a sufficiently high statistical significance (high confidence level) with respect to the reference sample.

The statistical significance, $\alpha$, is a measure to test a statistical (null) hypothesis whether or not it is very unlikely to have occurred given the null hypothesis. More precisely, the significance level can be defined as the probability of a sample rejecting the null hypothesis, given that it were true. The probability (p-value) of a result is the probability of obtaining the result and the difference (the deviation from the null hypothesis) is statistically significant when $p < \alpha$. The significance level is chosen before data collection, and is typically set to 5% (implying a 95% confidence level) or much lower. The value can be selected freely, but should ensure the system does not generate too many false alerts.

According to embodiments, this statistical technique is used for testing if two populations of brake events are equal (hypothesis-test). The p-value describes the likelihood of this hypothesis. For example, they are equal for high p-value > 5 % and they are likely not equal for low p-value < 5 %. Hence, p-value can be taken as exemplary (pseudo) brake performance value BPV, wherein the smaller the p-value, the worse the brake performance (BP). However, the p-value gives no indication of the "direction" of the difference (the mean residual does) and no indication of the cause. There is also a risk of overfitting (if sample size is small or does not include harsh brake events). Embodiments take also these effects into account.

In detail, embodiments of the present invention rely on the statistical analyses denoted as different parts A, B, C that includes the following:

part A: using a height sensor signal, for example of air bellows to rate the brake performance or to detect a brake force loss on wheels by comparing the deflections while braking (suspension deflection analysis);

part B: detecting a brake force loss on a wheel by comparing the slips of some or all wheels from one side of some or all axles of a trailer to each other while braking;

part C: the statistical analysis of the brake events data.

As next, particular embodiments relating to the separate parts are described in more detail. It is understood, embodiments of the present invention do not relate necessarily to all three parts A, B and C. Instead, it is likewise possible that the brake performance is monitored by only one part, i.e. is based only on part A or only on part B or only on part C. These parts can optionally be realized alone or in an arbitrary combination.

Part: Statistical Analysis of the Brake Events Data

The statistical analysis may include one or more of the following steps:

- collecting brake events as reference and for monitoring purposes (at least one reference data set or reference sample);
- creating multiple or single regressions based on braking events using relevant influence parameters which can be derived from various vehicle components (sensors) resulting in a reference regression curve/hyperplane;
- collecting/recording of braking events during normal operation (further data sets for comparison with the reference data set) and detecting residuals between the reference regression curve/hyperplane and the collected, new braking events to be monitored;
- conducting the hypothesis test provided by an analysis of variance (=comparison of the reference data with collected data while operating the vehicle);
- evaluating a likelihood value (p-value or Cpk-value; statistical significance or confidence level);
- building residuals between the reference data set and brake events to be tested, including determining the sign(s) of the residuals.

This statistical analysis can be separated into at least three main steps:

(i) conducting a regression analysis;

(ii) based thereon, calculating residuals of the tested data set using the regression curve/hyperplane for the reference data set (brake events), wherein the residuals describe the difference in brake performance since the result parameter of the multiple regression is the vehicle deceleration;

(iii) performing the actual test.

As for Step (i): multiple regression

Regression models describe the relationship between a response (output) variable and one or more predictor (input) variables. According to embodiments, a multiple linear regression with serval predictor variables will be used. Thus, the influence on vehicle deceleration occurred by the various parameters - beside the demand pressure - can be considered. For physical reasons, the brake performance can be influenced at least by the endurance brake, the drive train, the aerodynamic drag, the rolling resistance, the road gradient resistance, the coupling force between truck and trailer, vehicle load, ABS, ESP. These quantities can be considered as additional input variables for the regression analysis.

Parameters like the braking torque at the wheel-end, the pad wear and temperature are of major interest and measurements at the wheel-end can capture those parameters. Also these parameters can be used as input variables for the regression analysis. In particular, the braking torque plays the most important role and offers high potentials in terms of monitoring the brake performance. Beside that, there is a "bath-tube-diagram" describing a correlation between wear and temperature, showing a temperature range between 100 and 300 °C with a minimum of wear. At higher and lower temperatures, the wear increases significantly. Two main important scenarios can be mentioned. First, if the brake is not heated adequately during commissioning, appropriate chemical processes of the braking pad material cannot run sufficiently leading to a loss of brake performance. On the other hand, high temperature peaks during brake applications indicate prohibited wear assessing a defective brake. Since the temperature signal only enables indirect statements in terms of brake performance and due to their costs and difficulties at the mounting position, temperature signals may be considered with lower priority. It is understood that it is not needed to measure all parameters/quantities. Some of them (e.g. the braking torque, the temperature etc.) can also be estimated or determined or otherwise derived from (measured) parameters/quantities.

At least some of the following parameters may be considered primarily for the multiple regression analysis:

- vehicle deceleration as a possible output signal
- demand pressure as a possible main input signal
- vehicle load as another input signal
- vehicle velocity as additional input signal
- slip as additional input signal to consider indirect road condition and tyre road contact
- lateral deceleration to consider exclude cornering.

Other important parameters like endurance brake of the truck, the influence of different trucks, the weather may also be considered. However, the pressure may still be the most important input, although embodiments shall not be restricted on it.

As for Step (ii): building residuals

The residuals are built between the to be tested brake events (brake applications) and the brake events of the reference data set.

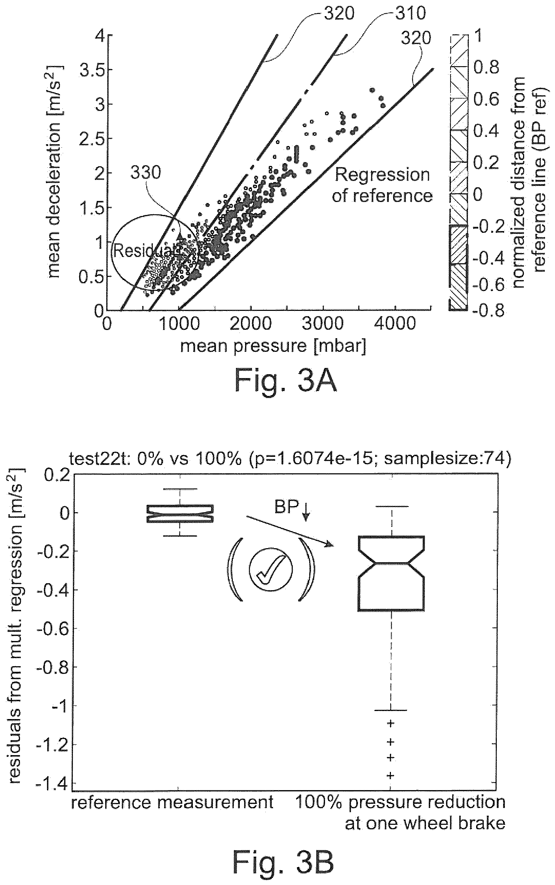

Fig. 3A shows a result of the linear regression defining a reference curve 310. In addition, road braking events are shown that are distributed between road event limits 320. The reference curve 310 is based on data obtained, e.g., immediately after an inspection (e.g. a trailer inspection using a roller brake tester; RBT), where a sufficient brake performance is assumed. The example shown in the Fig. 3A represents a linear regression based on public road measurements, since results of a multiple regression cannot be plotted in this way. It would give a hyperplane which can be depicted only for at most two input and one output parameter.

The statistical regression analysis of Fig. 3A relates the dependence of the mean deceleration as function of the mean pressure, wherein each dot relates to a braking event of a wheel. Fig. 3A further indicates the distance from the reference curve 310 as darkness/brightness of the brake events (dots). The more positive the deviation, the brighter is the brake event indicated. Similarly, the more negative the deviation the darker is the brake event indicated. In an ideal situation, the brake events at the separate wheels should lie close together near the reference curve 310.

However, if a residual 330 deviates significantly from the reference curve 310, a significant pressure loss at least one wheel may be present. This relates in particular to crossing or fall below the lower limit 320. If the dots lay in-between the upper and lower limits 320, the brake performance is assumed to be correct.

These residuals 330 can be taken from the statistical analysis of a given sample and by comparing the sample with the reference curve 310.

As for Step (iii): test

In the test an analysis of variance is performed in form of a statistical hypothesis testing whether or not the braking event data to be tested is statistically significant with respect to the reference data or can be assumed to be obtained under the same conditions as the reference data. In the affirmative case, no failure can be assumed and all data can be assumed to originate from the same statistical population.

The null hypothesis is thus that all tested brake events are random samples from the same population given by the reference brake events. The reference data may include the same number of braking events as the tested one and ensures satisfying brake performance. When a test result is deemed unlikely to have occurred by chance then it is statistically significant. The null-hypothesis can be rejected when its probability described by the p-value is below the pre-specified threshold of 5% (or another set value).

For example, when comparing the brake performance of reference brake events with further brake events during normal operation, the null-hypothesis would be that all brake applications have the same performance. Rejecting the null-hypothesis is taken to mean that the differences in observed brake performance between those observation groups are unlikely to be due to random deviations. Consequently, a loss of brake performance can be indicated.

According to embodiments, this test includes one or more of the following:

- define a probability that two samples came from the same (normal) distributions;
- differentiating between changes in independent variables and brake performance;
- comparing a more recent sample of data to historical reference data and see if there was a statistically significant change in brake performance;

- define an appropriate samples size that includes a broad spectrum of possible brake events (but it should not be too large to results in finite time).

The probability can be expressed, for example, by the p-value which in turn is bounded by the statistical significance level $\alpha$ or the confidence level (1-$\alpha$), which may by defined using the standard deviation of the normal distribution. For example, a confidence level can be defined as $2\sigma$, $3\sigma$, $4\sigma$ etc. for the statement that both distributions originate from the same population, where $\sigma$ is the statistical standard deviation.

Therefore, the p-value describes the likelihood of this hypothesis and a high p-value > 5 % indicates an acceptable brake performance, whereas a low p-value < 5 % should give an alert for a loss of brake performance. The p-value may be used in this approach as a pseudo brake performance value (first brake performance value BPV1). The smaller the p-value, the worse the brake performance (BP). On the other hand, the p-value does not indicate the cause and direction of the failure, whether the failure is underbraking or overbraking. Moreover, it is apparent for someone skilled in the art that the nature of the p-value as a statistical value implies a risk of over- and underfitting depending on the appropriate sample size.

**Fig. 3B** depicts a dependency of the residuals from a multiple regression curve for the example of a trailer which is loaded with 22 tons as a reference against a 100% pressure reduction measurement on one wheel of the test track (i.e. a total brake failure on one wheel). The sample includes 74 brake events.

The reference measurement indicates a range of variations for the residuals from the multiple regression within $\pm$ 0.1 m/s$^2$ (around a mean value of 0 for a given deceleration). During the measurements on the road (assuming a pressure drop on one wheel) the brake performance drops to a mean value of about -0.3 and with a significantly enlarged range of variations from 0 to about - 1 m/s$^2$. Therefore, this large bandwidth of measured brake events is caused by the loss of pressure on one wheel.

The p-value of approximately zero (p=1,6074 10$^{-15}$) indicates this failure in the brake performance, since the brake performance compared to measurements does not belong to the reference data set. If the residuals of the measurements have a negative sign, the braking events relate to an under-braking, since they lay mostly under the regression curve. Therefore, a potential brake failure of the at least one wheel can be reliably detected by both values (a low p-value and negative residuals) confirming that the p-value in combination with the residuals can be used as reliable brake performance values BPV1.

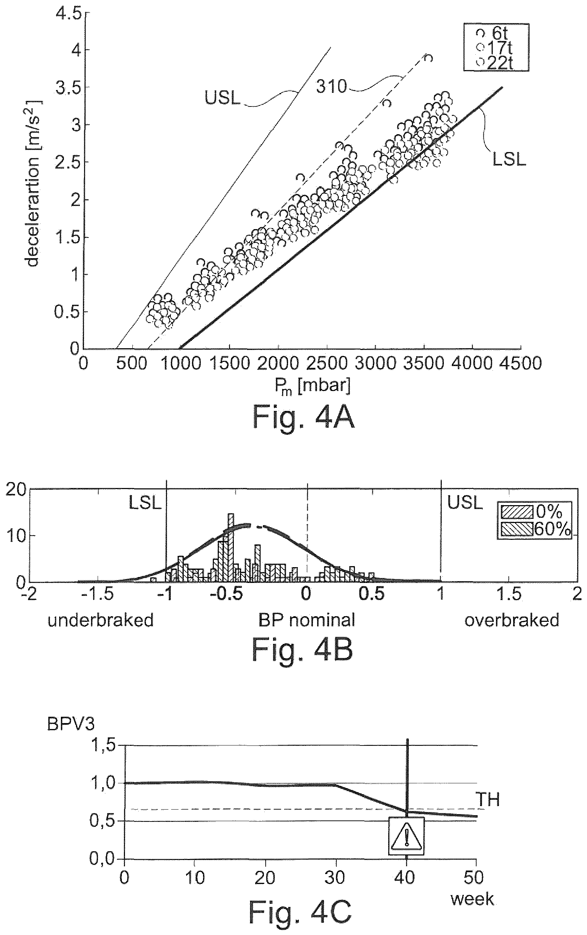

Apart from the p-value as brake performance value BPV1, also the process capability index (Cpk-value) can used as a viable brake performance value (which will also be denoted as BPV1). This approach is based on the statutory requirements that the deceleration of the vehicle shall be limited by a compatibility band between an upper specific limit USL and a lower specific limit LSL, see **Fig. 4A.** The process capability index Cpk or process capability ratio is a statistical measure of process capability: the ability of a process to produce output within specification limits. It can be defined as:

$$C_{pk} = \frac{1}{3\sigma} \min(\mu - LSL, \mu - USL) \qquad (1)$$

with arithmetic mean value:

$$\mu = \frac{1}{N} \sum_{i=1}^{N} x_i \qquad (2)$$

where xi may be defined as the ratio between the accelerations (or decelerations) and the corresponding pressure for brake events carried out over a predetermined time period (e.g. 1, 2, 3, ... days or a week). Due to the linear dependence, this ratio xi is constant.

According to eq. (1), Cpk=1 implies the distance to the limit is at least $3\sigma$, and Cpk=2 corresponds to a distance of at least $6\sigma$ to the closest limit (USL or LSL).

The reference curve 310 could be again a given brake performance by the manufacturer (or be derived after an inspection). It could be the mean curve of the upper and lower limits USL, LSL of the compatibility band. Moreover, the compatibility band may be normalized in that braking points laying on the upper specific limit (USL) will be assigned to 1, analogous braking points on the lower specific limit (LSL) to -1 and braking point in the middle (reference curve 310) to 0 (nominal brake performance).

**Fig. 4B** illustrates this idea, i.e. using the LSL and the USL from the given compatibility band as constant limits at +/-1. As further shown in Fig. 4B, this allows to supervise the measured braking events by creating a histogram of them and then to calculate the appropriate normal distribution and check its situation (distance and movement) relative to the limits. If the histogram appears normal, then the standard deviation and mean can be used to create an approximate probability density function (pdf) with the parameter composed of pressure divided by the acceleration. Now the probability of braking events (observations) can be noted, wherein events below a given probability should indicate a braking failure. In this exemplary histogram the Cpk-value is 0,57 (the distance to LSL).

This approach ensures that the observed brake performance statistically fits inside the compatibility band. In addition, the statistical approach should dynamically detect deterioration in brake performance before it is below standards. In comparison to a reference curve a change in brake performance can be analyzed using the brake performance value BPV defined by

$$BPV = \frac{C_{pk}}{C_{pk,ref}} \qquad (3)$$

i.e. as a ratio of the Cpk value of the current measurements with the reference data set. An advantage of this approach is that the Cpk-value represents as a statistical indicator a quality criterium of the "process".

**Fig. 4C** shows a scenario of using this BPV1 as indicator of a brake performance. As long as the BPV value is close to 1 (i.e. the Cpk value has not change much since the last inspection), the brake system at the different wheels is apparently operating correctly. However, in the example shown in Fig. 4C, after calendar week 30 the BPV start to deteriorate. This trend continues so that the BPV drops below a predefined threshold TH (e.g. 0,6 or 0,7) in the calendar week 40, which triggers an alert (e.g. given to the driver).

Again, multiple thresholds can be used to indicate how severe the malfunctioning is (e.g. a dropping below a second, subsequent threshold may advice the driver to have an immediate maintenance).

As for the other embodiments, the brake performance may describe the braking of the whole vehicle combination of the truck and/or the trailer. Furthermore, control variables can be introduced to control sub-groups of larger sample of data to see whether they have a statistically significant effect on the measured deceleration/braking pressure variable.

It is understood that a malfunction of one wheel will change the statistics, which can be detected by various statistical parameters. The described p-value and Cpk-Value are only examples. In the further embodiments, other statistical quantities such as such the mean $\mu$ (or expectation value) itself, the standard deviation $\sigma$ etc. man be used to identify deformations/deviations of the statistics.

Part: Detecting a Brake Force loss on a Wheel

Apart from the statistical analysis as described before, further embodiments rely on this part for detecting a failure or malfunctioning of a braking of at least one wheel. This part relates to a detecting a brake force loss on a wheel by comparing wheel speed or slip values of some or all wheels. The following wheels may be compared:

- wheels on the trailer (some or all);
- wheels on the tractor (some or all);
- wheel(s) on the trailer with wheels on the tractor (one or more or all);
- wheels on one side of the trailer (some or all);
- wheels on one side of the tractor (some or all);
- wheels on one side of the trailer with wheels on one side of the tractor (one or more or all).

Or some axles of a trailer compared to some or all axles of a towing vehicle (tractor).

The analysis of this part may include the following steps:

- collecting sensor signals from wheel speed sensors on some or all wheels (e.g. of the trailer and/or the tractor) while braking; and/or
- determining, based on the collected sensor signals, all slip values and their variances;
- monitoring or supervising each axle for symmetric brake forces while braking.

Moreover, at any time the wheel speed raw signal may be analyzed in detail in order to determine potential differences in wheel speeds for specific brake applications. For this, all sensors data may be stored accordingly.

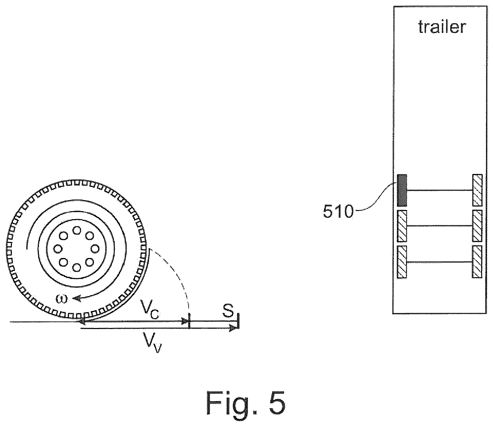

**Fig. 5** illustrates further the measurements, wherein on the right-hand side an exemplary trailer with six wheels and three axles are shown. For example, one wheel 510 may exhibit a more or less severe pressure drop resulting in a braking loss on this side of the trailer. This failure can be detected by analyzing the slip value of the wheels.

On the left-hand side an exemplary wheel is shown which rotates with an angular velocity $\omega$ and resulting in a wheel speed Vc which may differ from the vehicle velocity (speed) Vv due to a non-zero slip s. The slip s is therefore defined as:

$$s = 1 - \frac{v_c}{v_v} . \qquad (4)$$

The slip values s can be calculated for all wheels, for example, on the left side of the trailer to detect a failure of the one wheel 510. Also, the slip values s will exhibit normal fluctuations that can be analyzed using the statistical variance defined as:

$$var_L = \frac{1}{N-1} \sum_{i=1}^{N} \left| s_{L,i} - \mu \right|^2 \qquad (5)$$

with the arithmetic mean value $\mu$ defined in eq. (2). This variance may be used as a second brake performance value BPV2.

The unknown wheel speed Vc and vehicle velocity Vv can be obtained from corresponding speed sensors. The determined variance var can be used again to perform a statistical analysis whether or not a failure had occurred (e.g. $var_L$ is larger than a threshold value).

Therefore, in part B a brake force loss is detected on one or more wheels by comparing the wheel speeds Vc of the left or right side with each other in order to supervise the symmetric brake force while braking. For this, all wheels may be sensed.

Before evaluating the variance var, a filtering may be conducted to exclude the influence of a cornering. Therefore, brake applications exceeding a given threshold of lateral acceleration (Ay) will be filtered out.

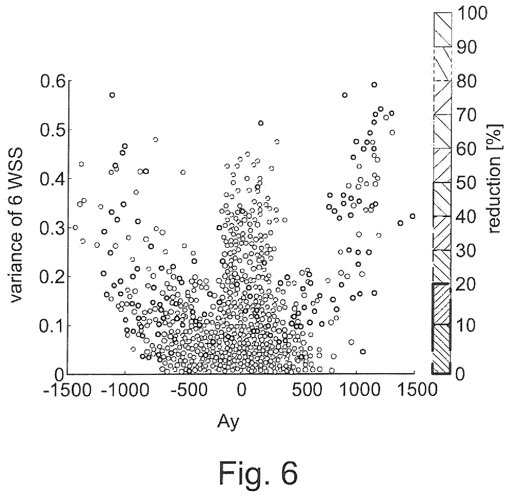

**Fig. 6** illustrates this filtering for a representation of braking events (dots) drawn depending on the slip variance for all six wheels (see Fig. 5) and the lateral acceleration Ay. It is apparent, a cornering vehicle will show lateral accelerations Ay and the corresponding brake events should be filtered to avoid false detections. For example, the depicted brake events shall be filtered within a region around the zero lateral acceleration Ay so that only slip values s should be considered for the statistical analysis that are within a predetermined region of the lateral acceleration, for example Ay values of $0 \pm 500$ or of $0 \pm 100$ measured in mm/s$^2$ (or any other range dependent on the circumstances). The darker dots relate to brake events, which were simulated without pressure reduction whereas the brighter dots relate to a pressure reduction on one wheel. Therefore, the brake events about zero lateral acceleration (Ay $\simeq$ 0) are sufficient to detect a brake failure.

Therefore, according to embodiments the lateral accelerations Ay may be monitored by corresponding sensors and used for filtering of the determined slip values s of the vehicle such as a trailer.

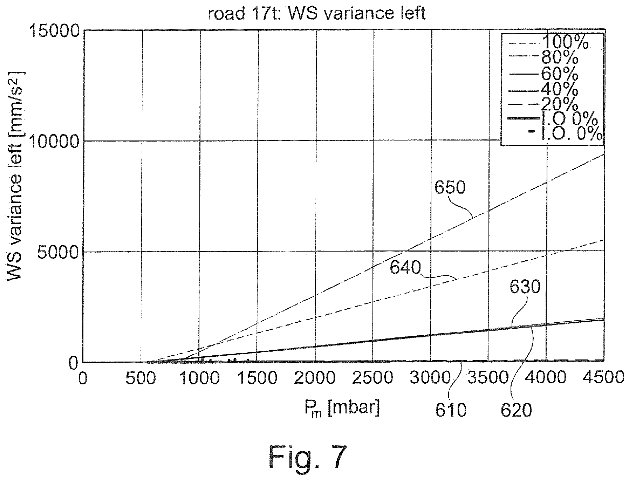

With different brake force reductions at a wheel, the variance of the wheel speed or rather the slip variance will increase. This effect will be enhanced with an increasing brake pressure related to a stronger brake application. If there is no loss of brake performance on any wheel, or in other words, when all wheels have the same brake performance, the variance will be very small (about zero). **Fig. 7** depicts this behavior for a trailer loaded with exemplary 17 tons of load with one wheel exhibiting a pressure drop.

In detail, Fig. 7 shows the variance of slip values as function of the brake pressure for different scenarios of pressure failure on one wheel. A first curve 610 relate to a zero-pressure failure or at most 20% pressure failure, which are almost indistinguishable with respect to slip variance. A second curve 620 indicates the slip-variance for a 40% pressure reduction on one wheel on the left-hand side. The third curve 630 shows the determined slip-variance for a pressure reduction of 60%, whereas a forth curve 640 shows the dependence for a total pressure loss and a fifth curve 650 relates to a 80% pressure loss on a wheel on the left-hand side.

According to embodiments, this malfunctioning is detected by using one or more thresholds for the slip-variances, which can easily be detected for large brake pressure. If for example, the variance exceeds a first threshold value TH1 or a second threshold value TH2, an alert may be generated to indicate a potential failure. On the other hand, any slip-variations below the first threshold TH1 may be regarded as still acceptable or may have other reasons. In addition, according to further embodiments an alert is not trigger based on the single event exceeding this threshold. Instead, the statistical significance of the brake events may again be evaluated to ensure the reliability of the derived results.

Furthermore, the curves in Fig. 7 may be derived as regression curves of calculated variances of each measurement, wherein the increased slope of the regression curves 610, ... , 650 represents an uneven brake distribution at the wheel end. With this regression curve, a potential defect of one wheel a loss of brake performance is very likely.

To further improve the detection, embodiments evaluate the following quantities, which can also be recorded (e.g. for the next service inspection):

- inadequate braking effort on one or more wheels;
- no braking effort on one or more wheels;
- abnormal lag in brake operation of any wheel;
- braking effort of one wheel is less than 70% of the maximum effort recorded on the other wheel on the same axle by comparing the wheels speed axle wise;
- monitoring or supervising each axle for symmetric brake forces while braking

Part: Suspensions Deflection Analysis

The analysis of this part may include the following steps:

- determining a deflection of a trailing arm suspension, for example on a trailer, which is while braking proportionally to the brake force; and/or
- evaluating suspension deflections, in particular while braking.

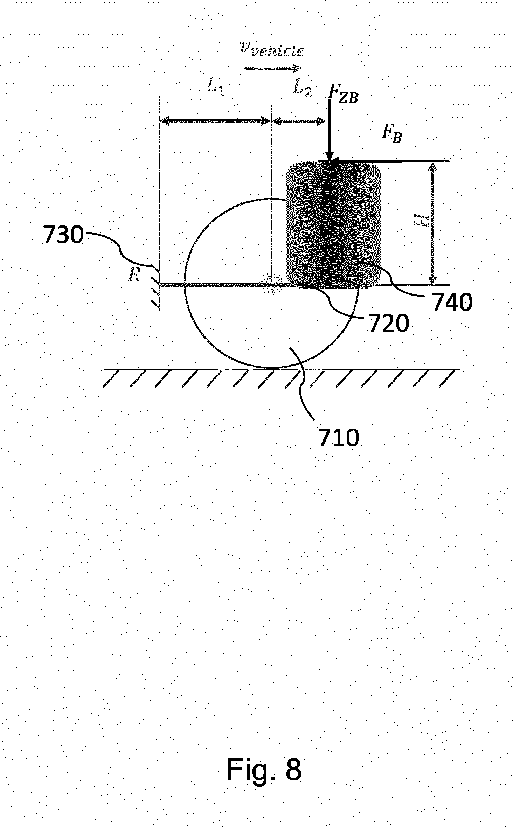

**Fig. 8** illustrates the suspension deflection analysis according to embodiments, wherein a change in a height H caused by a braking is detected and analyzed. This analysis can be performed on each wheel separately and Fig. 8 shows one exemplary wheel 710, which is suspended on a wheel arm 720 that couples rotatably to a frame 730 of the vehicle and couples to an air bellow 740. The height H of the air bellow 740 can be changed that causes a rotation of the wheel arm 720 about a rotational axis R. The height H of the air bellow 740 is thus a direct or indirect measure of a deflection of wheel arm 720.

According to embodiments a height sensor (not shown) is arranged at the air bellow 740 or another position and is configured to measure the height H and thus the actuation level of the air bellow 740. In addition, the height sensor is configured to measure the actuation level of the air bellow 740 or the actual distance from the axle to the chassis (frame) and thus indirectly the height over ground. If the wheel 710 is braked, a braking force Fb acts between the wheel 710 and the ground and thus against the vehicle velocity $v_{vehicle}$ causing, due to the rotatable suspension, a torque or a vertical force which will decrease the height H. If the brake action is stronger this deflection of the suspension arm 720 is likewise stronger so that the measurement of the height H can be used as an indicator how strong the brake force Fb acts on a particular wheel. This height H or its change can be transformed directly into the deflection force Fzb (counter force) by using the relation:

$$\Delta F_{ZB} = \frac{F_B \cdot H}{L_1 + L_2} \qquad , \qquad (4)$$

wherein Fb is the braking force. The aim of this evaluation is to estimate the brake force ratio between the axles/wheels based on the deflection. The deflection forces Fzb and/or the braking force Fb can be compared between difference wheels to detect again a failure or malfunctioning of at least one wheel brake. Different brake forces acting at different wheels/axes can thus be detected and analysed based on the measured heights H.

Further embodiments use this effect and determine a third brake performance value BPV3 (e.g. the deflection force Fzb) while a brake force Fb is acting on one or more wheels 710. Again, as for the other embodiments, also here, a statistical analysis can be performed in that the brake actuations are measured using the height H of the air bellow sensors at each wheel and compare all wheels to enable a statistical analysis in the same way as for the analysis of part A or part B.

According to further embodiments, the suspension deflection approach may include in particular one or more or all of the following steps/acts:

- causing a brake force $F_B$ by applying the brake on at least one wheel;
- causing a torque M around the fixing point R of the mounting of the trailing arm 720 by the normal force Q and the additional brake force Fb;
- moving of the trailing arm 720 (operating as lever in this case L1 +L2) resulting to a counter-force $F_{ZB}$ at the air bellow 740 based on a pressure increase in the bellow 740 of the air suspension;
- using equation (4) the brake force Fb can be determined from a measured change of height H (i.e. the suspensions deflection).

It is understood, when leveling the trailer, the volume of the air bellow 740 in- or decreases, but the pressure in the air bellow 740 will be the same. The height H depends on the air volume, wherein the pressure is linear or proportional to the load of the trailer and the volume is linear to the height H. The electric leveling-control reacts much later and with increased tolerance and does not have an effect on this counter-force.

It is further understood that the deflection at one or some or all individual axles can be measured and compared to each other, wherein the brake pressure at the brake(s) is measured in parallel. Besides the comparison, a learning algorithm based on the ratio between brake pressure and suspension deflection can be trained and monitored. This enables the detection of anomalies and defects (i.e. any kind of malfunctioning).

In addition to the analyses described as part A, part B, or part C, embodiments may use further optional features/steps to further improve the results.

For example, further embodiments may also use median and ranges of pressure and acceleration. The averaging may reduce the noise and storage may points in a given range and places them into bins. In addition, a pre-processing can be implemented before the statistical methods are carried out. The brake events may include an averaging of the pressure and accelerations for a given time point. For example, a speed vs. pressure graphs can be used to calculate the average braking pressure and deceleration for a given braking event.

The pre-processing variables may be selected from:

- exclude all brakes below 0.2 bar; there is only a moderate baking deceleration which can be easily be influenced;
- exclude brakes shorter than 2s and longer than 30s; here, the driver is only tipping the pedal for a short time period, not intending to do a real braking application (because of the delay, there is no deceleration signal although a demand pressure is measured);
- exclude all braking events, when the ABS system is active and when the lateral acceleration is above $0.2 \text{ m/s}^2$ (exclude cornering)

These measures may be taken to reduce the 'noise' in samples and to reduce the amount of data.

According to embodiments, at least some of the following values or quantities are determined continuously:

- calculating or collecting brake events while the vehicle is operating
- determining a braking demand
- determining a vehicle acceleration, defining a data set for braking events
- collect training data of brake performance as a reference with technically satisfying condition
- applying a statistic analysis method (hypothesis test to the data set)
- comparing a reference data set with to be tested data set
- determining a quality value (brake performance value BPV to monitor the brake performance based on collected brake event data)
- providing an alert in case of critical brake performance
- providing a report to satisfy the trailer's brake condition.

In summary, embodiments solve the objective to monitor the change of the brake performance by calculating brake performance values BPV (BPV1, BPV2, BPV3) having a same baseline and similar conditions. Otherwise the evaluation of the brake performance may yield false results. Thus, a main classification represents the vehicle load and to avoid excessive amount of data a classification into five equal load ranges may be used. However, there is a risk to collect to little data from one single truck which will be insufficient regarding statistical statements. The overcome this shortcoming, a correction function might be used.

Advantageous embodiments may include at least some of the following steps/subject matters:

- monitoring brake performance of the trailer;
- monitoring brake performance of the truck;
- a method can be used with different variants for trailer and/or truck:
- a combination of all parts A-C (e.g. using part A and check plausibility with part B and C of the method or using part A as stand-alone);
- an apparatus configured to collect data from trailer and/or truck electronic brake system, a respective method can be fully implemented in the apparatus;
- an apparatus configured to collect data from trailer and/or truck electronic brake system and to send the data to a cloud where the algorithms (parts A, B, C) of the method will be calculated;
- a system configured to issue an alert when the brake performance value BPV falls below a given threshold;
- a system integrated into a trailer and/or truck electronic brake system as well as for different types (disc and drum brake) of brakes.

The description and drawings merely illustrate the principles of the invention. It will thus be appreciated that those skilled in the art will be able to modify the invention within the scope defined by the appended claims.

LIST OF REFERENCE SIGNS

| | |
|---|---|
| 310 | reference curve |
| 320 | road events limits |
| 330 | residual(s) |
| 510 | wheel with brake failure |
| 610,620 | curves of slip variances |
| 710 | wheel |
| 720 | wheel arm |
| 730 | frame |
| 740 | air bellow |
| H | height |
| R | rotational axis |
| Fb | braking force |
| Fzb | deflection force |
| Q | vertical force |

**Claims**

1. A method for monitoring a brake performance of a vehicle, in particular of a trailer of a commercial vehicle, the method comprising:

   - collecting (S100) of sensor data from various sensors, the sensor data are associated with brake events,

   **characterized by:**

   - determining (S200) at least one brake performance value (BPV1, BPV2, BPV3) using the sensor data based on a statistical analysis (S230) based on a regression, wherein the statistical analysis (S230) includes the following steps:

     collecting reference sensor data associated with brake events assumed to be accurate and using the reference sensor data for forming a regression hyperplane;
     collecting sensor data during operation of the vehicle;
     conducting a hypothesis test by comparing the reference sensor data with the sensor data during operation by determining a likelihood value (p; Cpk) that a difference between the sensor data during operation and the reference sensor data is of no statistical significance;
     determining a first brake performance value (BPV1) based on the likelihood value (p; Cpk);

   - detecting (S300) a malfunctioning of at least one brake of at least one wheel based on the determined at least one brake performance value (BPV1, BPV2, BPV3).

2. The method according to claim 1,
   **characterized in that**
   the statistical analysis (S230) includes one or more of the following steps:

   - determining as sensor data for various brake events: a vehicle deceleration, a brake demand signal and at least one parameter selected from a demand pressure, a vehicle load, a vehicle speed, a slip, a lateral deceleration;
   - determining of one or more residuals, especially their sign, of the sensor data during operation relative to the regression hyperplane.

3. The method of claim 1 or claim 2, **characterized in that:**

the step determining (S200) at least one brake performance value (BPV1, BPV2, BPV3) using the sensor data based on at least one of the following analyses:

(A) a suspension deflection analysis (S210) based on a comparison of deflections of wheel suspensions while braking;
(B) a brake force loss analysis (S220) based on a comparison of wheel speed values of different wheels.

4. The method according to claims 3,
**characterized in that**
the brake force loss analysis (S220) includes one or more of the following steps:

- receiving sensor signals from wheel speed sensors and calculating slip values (s) or ratios of parameters of different wheels;
- determining a variance (var) of the wheel speed values or slip values (s) of different or all wheels while braking; and
- determining a second brake performance value (BPV2) based on the variance (var) of the slip values (s).

5. The method according to claim 3 or claim 4, wherein the various sensors include one or more height sensors for controlling or measuring one or more air bellows,
**characterized in that**
the suspension deflection analysis (S210) includes one or more of the following steps:

- determining a suspension deflection or a change of a suspension height (H) at one or more wheels based on sensor signals from the one or more height sensors while braking;
- determining a third brake performance value (BPV3) based on the determined suspension deflection that is proportional to a brake force (Fb).

6. The method according to one of claims 2 to 5,
**characterized in that**

- defining at least one threshold (TH1, TH2) for each or at least two of the first to third brake performance values (BPV1, BPV2, BPV3);
- establishing the malfunctioning if at least two brake performance values (BPV1, BPV2, BPV3) exceed at least one of their respective thresholds (TH1, TH2);
- issuing an alert if the malfunctioning is established.

7. The method according to one of the preceding claims,
**characterized by**

- detecting a cornering of the vehicle;
- filtering sensor data based on a detected cornering.

8. The method according to one of the preceding claims, wherein the vehicle is a trailer or a tractor or vehicle combination,
**characterized in that**
the collected sensor data are associated with wheels on one side or with one more axles of the vehicle.

9. The method according to one of the preceding claims,
**characterized by**
transmitting data from the vehicle to a remote processing unit via a wireless communications link so that at least one of the method steps is carried out on the remote processing unit.

10. A computer program having a program code for performing the method according to any one of claims 1 to 9, when the computer program is executed on a processor.

11. An apparatus for monitoring a brake performance of a vehicle, in particular of a trailer of a commercial vehicle, the vehicle comprising various sensors for collecting sensor data associated to brake events,
**characterized by:**
at least one control unit configured to perform the method of claim 1.

**12.** The apparatus according to claim 11,
**characterized in that:**
the at least one control unit includes a cloud-based control unit.

**13.** Vehicle,
**characterized by**
an electronic brake system (EBS, TEBS) with an integrated apparatus according to claim 11.

**Patentansprüche**

**1.** Verfahren zur Überwachung einer Bremsleistung eines Fahrzeugs, insbesondere eines Anhängers eines Nutzfahrzeugs, wobei das Verfahren Folgendes umfasst:

- Sammeln (S100) von Sensordaten verschiedener Sensoren, wobei die Sensordaten Bremsereignissen zugeordnet sind,

**gekennzeichnet durch:**

- Bestimmen (S200) mindestens eines Bremsleistungswertes (BPV1, BPV2, BPV3) unter Verwendung der Sensordaten auf Grundlage einer statistischen Analyse (S230) auf Grundlage einer Regression, wobei die statistische Analyse (S230) die folgenden Schritte beinhaltet:

Sammeln von Referenzsensordaten, die als genau angenommenen Bremsereignissen zugeordnet sind, und Verwendung der Referenzsensordaten zur Bildung einer Regressionshyperebene;
Sammeln von Sensordaten während des Betriebs des Fahrzeugs; Durchführen eines Hypothesentests durch Vergleichen der Referenzsensordaten mit den Sensordaten während des Betriebs durch Bestimmen eines Wahrscheinlichkeitswerts (p; Cpk), dass ein Unterschied zwischen den Sensordaten während des Betriebs und den Referenzsensordaten statistisch nicht signifikant ist;
Bestimmen eines ersten Bremsleistungswertes (BPV1) auf Grundlage des Wahrscheinlichkeitswertes (p; Cpk);

- Erkennen (S300) einer Fehlfunktion mindestens einer Bremse mindestens eines Rades auf Grundlage des bestimmten mindestens einen Bremsleistungswertes (BPV1, BPV2, BPV3).

**2.** Verfahren nach Anspruch 1,
**dadurch gekennzeichnet, dass**
die statistische Analyse (S230) einen oder mehrere der folgenden Schritte beinhaltet:

- Bestimmen von Sensordaten für verschiedene Bremsereignisse: eine Fahrzeugverzögerung, ein Bremsanforderungssignal und mindestens einen Parameter, der aus einem Anforderungsdruck, einer Fahrzeuglast, einer Fahrzeuggeschwindigkeit, einem Schlupf und einer Querverzögerung ausgewählt wird;
- Bestimmen eines oder mehrerer Residuen, insbesondere ihres Vorzeichens, der Sensordaten während des Betriebs relativ zur Regressionshyperebene.

**3.** Verfahren nach Anspruch 1 oder Anspruch 2, **dadurch gekennzeichnet, dass:**
der Schritt des Bestimmens (S200) mindestens eines Bremsleistungswertes (BPV1, BPV2, BPV3) unter Verwendung der Sensordaten auf Grundlage mindestens einer der folgenden Analysen erfolgt:

(A) eine Aufhängungsauslenkungsanalyse (S210) auf Grundlage eines Vergleichs der Auslenkungen von Radaufhängungen beim Bremsen;
(B) eine Bremskraftverlustanalyse (S220) auf Grundlage eines Vergleichs von Raddrehzahlwerten verschiedener Räder.

**4.** Verfahren nach Anspruch 3,
**dadurch gekennzeichnet, dass**
die Bremskraftverlustanalyse (S220) einen oder mehrere der folgenden Schritte beinhaltet:

- Empfangen von Sensorsignalen von Raddrehzahlsensoren und Berechnen von Schlupfwerten (s) oder Verhältnissen von Parametern verschiedener Räder;
- Bestimmen einer Varianz (var) der Raddrehzahlwerte oder Schlupfwerte (s) verschiedener oder aller Räder beim Bremsen; und
- Bestimmen eines zweiten Bremsleistungswertes (BPV2) auf Grundlage der Varianz (var) der Schlupfwerte (s).

5. Verfahren nach Anspruch 3 oder Anspruch 4, wobei die verschiedenen Sensoren einen oder mehrere Höhensensoren zur Steuerung oder Messung eines oder mehrerer Luftbälge beinhalten,
**dadurch gekennzeichnet, dass**
die Aufhängungsauslenkungsanalyse (S210) einen oder mehrere der folgenden Schritte beinhaltet:

- Bestimmen einer Aufhängungsauslenkung oder einer Änderung einer Aufhängungshöhe (H) an einem oder mehreren Rädern auf Grundlage von Sensorsignalen von dem einen oder den mehreren Höhensensoren beim Bremsen;
- Bestimmen eines dritten Bremsleistungswertes (BPV3) auf Grundlage der bestimmten Aufhängungsauslenkung, die proportional zu einer Bremskraft (Fb) ist.

6. Verfahren nach einem der Ansprüche 2 bis 5,
**dadurch gekennzeichnet, dass**

- mindestens ein Schwellenwert (TH1, TH2) für jeden oder mindestens zwei der ersten bis dritten Bremsleistungswerte (BPV1, BPV2, BPV3) definiert wird;
- die Fehlfunktion festgestellt wird, wenn mindestens zwei Bremsleistungswerte (BPV1, BPV2, BPV3) mindestens einen ihrer jeweiligen Schwellenwerte (TH1, TH2) überschreiten;
- eine Warnung ausgegeben wird, wenn die Fehlfunktion festgestellt wird.

7. Verfahren nach einem der vorstehenden Ansprüche,
**gekennzeichnet durch**

- Erkennen einer Kurvenfahrt des Fahrzeugs;
- Filtern von Sensordaten auf Grundlage einer erkannten Kurvenfahrt.

8. Verfahren nach einem der vorstehenden Ansprüche, wobei das Fahrzeug ein Anhänger oder ein Traktor oder eine Fahrzeugkombination ist,
**dadurch gekennzeichnet, dass**
die gesammelten Sensordaten Rädern auf einer Seite oder einer oder mehreren Achsen des Fahrzeugs zugeordnet sind.

9. Verfahren nach einem der vorstehenden Ansprüche,
**gekennzeichnet durch**
die Übertragung von Daten vom Fahrzeug zu einer entfernten Verarbeitungseinheit über eine drahtlose Kommunikationsverbindung, so dass mindestens einer der Verfahrensschritte auf der entfernten Verarbeitungseinheit ausgeführt wird.

10. Computerprogramm, das einen Programmcode zur Durchführung des Verfahrens nach einem der Ansprüche 1 bis 9 aufweist, wenn das Computerprogramm auf einem Prozessor ausgeführt wird.

11. Einrichtung zur Überwachung des Bremsverhaltens eines Fahrzeugs, insbesondere eines Anhängers eines Nutzfahrzeugs, wobei das Fahrzeug verschiedene Sensoren zur Sammlung von Sensordaten im Zusammenhang mit Bremsereignissen umfasst,
**gekennzeichnet durch:**
mindestens eine Steuereinheit, die zur Durchführung des Verfahrens nach Anspruch 1 konfiguriert ist.

12. Einrichtung nach Anspruch 11,
**dadurch gekennzeichnet, dass:**
die mindestens eine Steuereinheit eine Cloud-basierte Steuereinheit beinhaltet.

13. Fahrzeug,

**gekennzeichnet durch**

ein elektronisches Bremssystem (EBS, TEBS) mit einer integrierten Einrichtung nach Anspruch 11.

**Revendications**

1. Procédé de surveillance de performances de freinage d'un véhicule, en particulier d'une remorque d'un véhicule utilitaire, le procédé comprenant :

    - la collecte (S100) de données de capteur provenant de divers capteurs, les données de capteur étant associées à des événements de freinage,

    **caractérisé par** :

    - la détermination (S200) d'au moins une valeur de performances de freinage (BPV1, BPV2, BPV3) à l'aide des données de capteur sur la base d'une analyse statistique (S230) basée sur une régression, dans lequel l'analyse statistique (S230) inclut les étapes suivantes :

        la collecte de données de capteur de référence associées à des événements de freinage supposés précis et l'utilisation des données de capteur de référence pour former un hyperplan de régression ;
        la collecte de données de capteur pendant le fonctionnement du véhicule ; la réalisation d'un test d'hypothèse en comparant les données de capteur de référence aux données de capteur pendant le fonctionnement en déterminant une valeur de vraisemblance (p ; Cpk) selon laquelle une différence entre les données de capteur pendant le fonctionnement et les données de capteur de référence n'a aucune signification statistique ;
        la détermination d'une première valeur de performances de freinage (BPV1) sur la base de la valeur de vraisemblance (p ; Cpk) ;

    - la détection (S300) d'un dysfonctionnement d'au moins un frein d'au moins une roue sur la base de la au moins une valeur de performance de freinage (BPV1, BPV2, BPV3) déterminée.

2. Procédé selon la revendication 1,
   **caractérisé en ce que**
   l'analyse statistique (S230) inclut une ou plusieurs des étapes suivantes :

    - la détermination comme données de capteur pour divers événements de freinage : d'une décélération du véhicule, d'un signal de demande de freinage et d'au moins un paramètre sélectionné parmi une pression de demande, une charge du véhicule, une vitesse du véhicule, un glissement, une décélération latérale ;
    - la détermination d'une ou plusieurs valeurs résiduelles, notamment leur signe, des données de capteur pendant le fonctionnement par rapport à l'hyperplan de régression.

3. Procédé selon la revendication 1 ou la revendication 2, **caractérisé en ce que** :
   l'étape de détermination (S200) d'au moins une valeur de performances de freinage (BPV1, BPV2, BPV3) à l'aide des données de capteur sur la base d'au moins une des analyses suivantes :

    (A) une analyse de déviation de suspension (S210) basée sur une comparaison de déviations de suspensions de roues lors du freinage ;
    (B) une analyse de perte de force de freinage (S220) basée sur une comparaison de valeurs de vitesse de roue de différentes roues.

4. Procédé selon la revendication 3,
   **caractérisé en ce que**
   l'analyse de perte de force de freinage (S220) inclut une ou plusieurs des étapes suivantes :

    - la réception de signaux de capteur provenant de capteurs de vitesse de roue et le calcul de valeurs de glissement (s) ou de rapports de paramètres de différentes roues ;
    - la détermination d'une variance (var) des valeurs de vitesse de roue ou des valeurs de glissement (s) de différentes ou de toutes les roues pendant le freinage ; et

- la détermination d'une deuxième valeur de performances de freinage (BPV2) sur la base de la variance (var) des valeurs de glissement (s).

5. Procédé selon la revendication 3 ou la revendication 4, dans lequel les divers capteurs incluent un ou plusieurs capteurs de hauteur pour commander ou mesurer un ou plusieurs soufflets pneumatiques,
**caractérisé en ce que**
l'analyse de déviation de suspension (S210) inclut une ou plusieurs des étapes suivantes :

- la détermination d'une déviation de suspension ou d'un changement d'une hauteur de suspension (H) au niveau d'une ou plusieurs roues sur la base de signaux de capteur provenant des un ou plusieurs capteurs de hauteur pendant le freinage ;
- la détermination d'une troisième valeur de performances de freinage (BPV3) sur la base de la déviation de suspension déterminée qui est proportionnelle à une force de freinage (Fb).

6. Procédé selon l'une des revendications 2 à 5,
**caractérisé en ce que**

- la définition d'au moins un seuil (TH1, TH2) pour chacune ou au moins deux des première à troisième valeurs de performances de freinage (BPV1, BPV2, BPV3) ;
- la constatation du dysfonctionnement si au moins deux valeurs de performances de freinage (BPV1, BPV2, BPV3) dépassent au moins un de leurs seuils (TH1, TH2) respectifs ;
- l'émission d'une alerte si le dysfonctionnement est constaté.

7. Procédé selon l'une des revendications précédentes,
**caractérisé par**

- la détection d'un virage du véhicule ;
- le filtrage de données de capteur en fonction d'un virage détecté.

8. Procédé selon l'une des revendications précédentes, dans lequel le véhicule est une remorque ou un ensemble tracteur ou véhicule,
**caractérisé en ce que**
les données de capteur collectées sont associées aux roues d'un côté ou à un ou plusieurs essieux du véhicule.

9. Procédé selon l'une des revendications précédentes,
**caractérisé par**
la transmission de données du véhicule à une unité de traitement distante par l'intermédiaire d'une liaison de communication sans fil de sorte qu'au moins une des étapes du procédé soit réalisée sur l'unité de traitement distante.

10. Programme informatique présentant un code de programme qui réalise le procédé selon l'une quelconque des revendications 1 à 9, lorsque le programme informatique est exécuté sur un processeur.

11. Appareil pour surveiller des performances de freinage d'un véhicule, en particulier d'une remorque d'un véhicule utilitaire, le véhicule comprenant divers capteurs pour collecter des données de capteur associées à des événements de freinage,
**caractérisé par** :
au moins une unité de commande configurée pour réaliser le procédé selon la revendication 1.

12. Appareil selon la revendication 11,
**caractérisé en ce que** :
la au moins une unité de commande inclut une unité de commande basée sur le cloud.

13. Véhicule,
**caractérisé par**
un système de freinage électronique (EBS, TEBS) avec un appareil intégré selon la revendication 11.

collecting of sensor data from various
sensors, the sensor data
are associated with brake events

S100

determining a brake performance
value using the sensor data

S200

S230

statistical
analysis based
on multiple
regression

S220

a brake force
loss analysis
based on a
comparison
of slip values

S210

a suspension
deflection
analysis based
on a deflections
of wheel

detecting a malfunctioning of
a brake of at least one wheel
based on the determined
the brake performance value

S300

Fig. 1

Fig. 2

Fig. 3A

Fig. 3B

Fig. 4A

Fig. 4B

Fig. 4C

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2462864 B
- GB 2531391 B
- GB 2532112 B
- US 5892437 A